# EUROPÄISCHE PATENTANMELDUNG

(11) **EP 2 194 277 A1**
(43) Veröffentlichungstag der Anmeldung: **09.06.2010**
(21) Anmeldenummer: 08170848.9
(22) Anmeldetag: 05.12.2008
(51) Int. Cl.: F04D 27/02, F04D 29/42, F04D 29/66, F02C 6/12

(54) **Verdichterstabilisator**

(71) Anmelder: ABB Turbo Systems AG, 5400 Baden (CH)
(72) Erfinder: Kühnel, Janpeter, 8180 Bülach (CH)
(74) Vertreter: ABB Patent Attorneys

(57) **Zusammenfassung**

Im Innern des Verdichtergehäuses (10) ist ein ringförmiger Zirkulationsraum (13) angeordnet, welcher den Hauptströmungskanal radial umschliesst und welcher sich vom Ansaugbereich (11) bis zu einer umlaufenden Zirkulationsöffnung (12) im Bereich der Laufschaufeln des Verdichterrades (1) erstreckt. Zwischen den umlaufenden Öffnungen ist der Zirkulationsraum (13) durch eine ringförmige Konturwand (15) gegen den Hauptströmungskanal abgegrenzt. Die Konturwand ist über mehrere, in Umfangsrichtung unterschiedlich voneinander beabstandete Streben (14) mit dem inneren Verdichtergehäuse verbunden.
Durch die unregelmässige Verteilung der Streben in Umfangsrichtung ergeben sich keine unerwünschten Schwingungsanregungen.

## Beschreibung

### Technisches Gebiet

Die Erfindung bezieht sich auf das Gebiet der abgasbetriebenen Turbolader.

Sie betrifft einen Verdichter eines solchen Abgasturboladers mit einer gegen die Hauptströmung abgegrenzten Zirkulationskammer.

### Stand der Technik

Für die Leistungssteigerung einer Brennkraftmaschine werden heutzutage standardmässig Abgasturbolader eingesetzt, mit einer Turbine im Abgastrakt der Verbrennungskraftmaschine und mit einem der Verbrennungskraftmaschine vorgelagerten Verdichter. Die Abgase der Brennkraftmaschine werden dabei in der Turbine entspannt. Die dabei gewonnene Arbeit wird mittels einer Welle auf den Verdichter übertragen, welcher die der Brennkraftmaschine zugeführte Luft verdichtet. Durch die Verwendung der Energie der Abgase zur Verdichtung der dem Verbrennungsprozess in der Brennkraftmaschine zugeführten Luft, können der Verbrennungsprozess und der Wirkungsgrad der Brennkraftmaschine optimiert werden.

Aus DE 42 13 047 A1 ist ein Abgasturbolader bekannt, in dessen Gehäuse ein Verdichterrad umläuft. Das Gehäuse weist einen Einlasskanal auf, in welchen eine Innenwand eingesetzt ist, welche einerseits die Hauptkanalkontur formt und andererseits eine den Hauptkanal umgebende ringförmige Zirkulationskammer begrenzt. Der Innenraum der Ringkammer ist durch eine Öffnung mit dem Verdichtereinlass und im Bereich des Verdichterrades durch einen Ringschlitz in der Konturwand der Ringkammer mit dem Einlasskanal verbunden. Die Konturwand ist über Stege zum Gehäuse hin konzentrisch gehalten.

Die bei Verdichtern dieser Art vorgesehene Ringkammer ist eine sog. Kennfeldstabilisierende Massnahme (KSM). Dabei kann vor dem Erreichen der Verdichterpumpgrenze eine Rezirkulation der Strömung aus dem Verdichterrad zurück in den Einlasskanal vor dem Verdichterrad, erfolgen, wodurch das Verdichterrad einen scheinbar höheren Durchsatz sieht. Im Betriebsbereich nahe der Verdichterstopfgrenze wird der ringförmige Schlitz von der Strömung als zusätzlicher Eintritt genutzt. Es findet also keine Rezirkulation mehr statt, was die gewünschte Verschiebung der Stopfgrenze zu höheren Durchsätzen zur Folge hat.

Die gewünschte Kennfelderweiterung des Verdichters wird neben Wirkungsgradeinbussen auch durch oftmals unzulässige Geräusch- und Schwingungsentwicklung erkauft. Verantwortlich für derartige Schwingungsanregungen in den Laufschaufeln können unter anderem die Stützrippen sein, mit welchen die Innenwand der Ringkammer am Gehäuse befestigt ist.

Geräuschreduzierende Massnahmen sind verschiedentlich vorgeschlagen worden. So ist etwa aus der EP0605184B1 ein Verdichter bekannt, bei dem die Geräuschentwicklung dadurch verringert werden soll, dass in der Ringkammer oder in Strömungsrichtung der Luft vor der Ringkammer eine Vielzahl von gegeneinander versetzten Rippen vorgesehen ist, die den Schall ablenken und zum Teil reflektieren, wodurch das Geräusch reduziert wird. Die Anbringung und Anordnung dieser Rippen ist jedoch verhältnismäßig aufwendig und nur teilweise erfolgreich, da der Schall trotzdem auf das Verdichtergehäuse übertragen und in die Umgebung abgestrahlt wird.

### Kurze Darstellung der Erfindung

Der Erfindung liegt die Aufgabe zugrunde, schwingungsreduzierende Massnahmen für einen Verdichter mit einer gegen die Hauptströmung abgegrenzten Zirkulationskammer zu definieren.

Erfindungsgemäss sind die die Konturwand tragenden Streben in Umfangsrichtung unterschiedlich voneinander beabstandet angeordnet.

Eine Gleichverteilung der Stützrippen führt zur Ausbildung von bevorzugten Erregerordnungen bei der Schwingungsanregung, wobei die bevorzugten Erregerordnungen direkt von der Anzahl der Stützrippen abhängen. Mit einer Ungleichverteilung wird die vorhandene Anregungsenergie auf verschiedene Erregerordnungen verteilt. Somit wird die Anregung pro Erregerordnung reduziert und kritische Resonanzen können gezielt vermieden werden. Die Ungleichverteilung der Stützrippen führt somit zu einer geringeren Anregung der Laufschaufelschwingung. Weiter wirkt sich die Ungleichverteilung der Stützrippen auf die Verteilung der Umfangssteifigkeit aus. Generell ist das Verdichtergehäuse, welches die Strömung der Radialverdichterstufe nach dem Diffusor aufnimmt und dem Rohrleitungssystem zuführt als Spirale und damit nicht umfangssysmetrisch gestaltet. Dies führt zu einer ungleichmässigen Verformung im Betrieb durch die thermische Beanspruchung des Gehäuses. Als Folge bildet sich eine ungleiche Verteilung der Spiele zwischen dem rotierenden Verdichter und dem stehenden Gehäuse aus. Um ein Streifen der Laufschaufeln des Verdichterrades an den Gehäuseteilen zu verhindern, muss das mittlere Spiel vergrössert werden, was direkt zu Wirkungsgradverlusten führt. Mit der Ungleichverteilung der Stützrippen erzeugt man auch für das jnnere, strömungskanalnahe Gehäuse eine über dem Umfang ungleichmässige Steifigkeit. Mittels einer vorteilhaften Kombination von innerem und äusserem Gehäuse wird eine Spielreduktion ermöglicht und eine Wirkungsgradsteigerung erreicht.

Optional weisen alle Paare von benachbart zueinander angeordneten Streben einen anderen Abstand auf als die anderen Paare von benachbart zueinander angeordneten Streben.

Weitere Vorteile ergeben sich aus den abhängigen Ansprüchen.

### Kurze Beschreibung der Zeichnungen

Im folgenden sind anhand der Figuren Ausführungsbeispiele des erfindungsgemässen Verdichters schematisch dargestellt und näher erläutert. In allen Figuren sind gleichwirkende Elemente mit gleichen Bezugszeichen versehen. Es zeigen:
- Fig. 1: ein Schnittbild eines Abgasturboladers mit einem Verdichter mit einer Zirkulationskammer,
- Fig. 2: eine Ansicht auf einen entlang 11-11 geführten Schnitt durch die erfindungsgemäss ausgestaltete Zirkulationskammer des Verdichters nach Fig. 1.

### Weg zur Ausführung der Erfindung

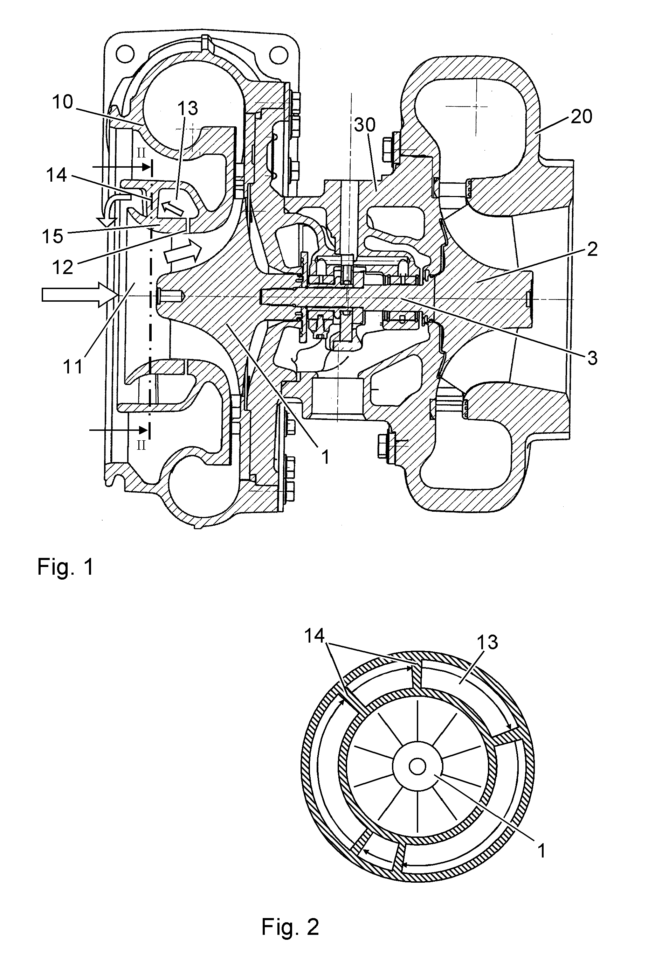

Der Verdichter des in Fig. 1 dargestellten Abgasturboladers umfasst ein Verdichtergehäuse 10 und ein im Gehäuse auf einer Welle 3 drehbar angeordnetes Verdichterrad 1. Ebenfalls mit der Welle 3 verbunden ist das im Turbinengehäuse 20 angeordnete Turbinenrad 2. Die Abgase der Brennkraftmaschine werden in der Turbine entspannt. Die gewonnene Arbeit wird mittels der Welle auf das Verdichterrad übertragen, welcher die der Brennkraftmaschine zugeführte Luft verdichtet. Das Verdichtergehäuse 10 umgibt einen Anströmkanal 11, durch den die Luft als zu verdichtendes Medium auf das Verdichterrad geführt wird. Die Pfeile deuten Luftströmungen an.

Im Innern des Verdichtergehäuses ist ein ringförmiger Zirkulationsraum 13 angeordnet, welcher den Hauptströmungskanal radial umschliesst und welcher sich vom Ansaugbereich 11 bis zu einer zumindest teilweise umlaufenden Zirkulationsöffnung 12 im Bereich der Laufschaufeln des Verdichterrades 1 erstreckt. Der Zirkulationsraum 13 ist über zwei Öffnungen zum Hauptströmungskanal hin geöffnet. Stromauf des Verdichterrads ist eine radiale Eintrittsöffnung angeordnet und stromab der Eintrittskante des Verdichterrades und im Überdeckungsbereich zu dessen Einlauf eine radiale Konturnut, die Zirkulationsöffnung 12. Zwischen den umlaufenden Öffnungen ist der Zirkulationsraum 13 durch eine ringförmige Konturwand 15 gegen den Hauptströmungskanal abgegrenzt. Die Konturwand ist über mehrere Streben 14 mit dem inneren Verdichtergehäuse verbunden.

Erfindungsgemäss sind die die Konturwand tragenden Streben in Umfangsrichtung unterschiedlich voneinander beabstandet angeordnet, wie dies in der Fig. 2 dargestellt ist.

In einer besonders vorteilhaften Ausführungsform weisen alle Paare von benachbart zueinander angeordneten Streben einen anderen Abstand auf als die anderen Paare von benachbart zueinander angeordneten Streben.

Die die Konturwand tragenden Streben 14 können als Schaufelprofile beziehungsweise Leitstege ausgebildet sein, um die Strömung in der Zirkulationskammer mit einem Drall zu beaufschlagen.

Die Streben 14 können alle rein radial oder alle gleich oder ungleich zur radialen Richtung geneigt ausgebildet sind.

Die Zirkulationsöffnung 12 kann als ein umlaufender Ringspalt, oder unterteilt in mehrere Ringspaltsegmente ausgebildet sein. Ebenso kann die Ringkammer in mehrere Segmente in Umfangsrichtung unterteilt sein. Dabei können die Segmente gleich oder ungleich gross ausgebildet sein.

### BEZUGSZEICHENLISTE

- A: Achse
- 1: Verdichterrad
- 10: Verdichtergehäuse
- 11: Ansaugkanal
- 12: Zirkulationsöffnungen
- 13: Zirkulationsraum
- 14: Streben
- 15: Konturwand
- 2: Turbinenrad
- 20: Turbinengehäuse
- 3: Turbinenwelle
- 30: Lagergehäuse

## Patentansprüche

1. Verdichter eines Abgasturboladers, umfassend ein drehbar gelagertes Verdichterrad (1), einen Hauptströmungskanal zum Zuführen eines zu verdichtenden Mediums auf das Verdichterrad sowie eine radial ausserhalb des Hauptströmungskanals angeordnete Zirkulationskammer (13), welche durch eine Konturwand (15) vom Hauptströmungskanal abgegrenzt ist und welche sich von einem Ansaugbereich (11) des Hauptströmungskanals bis zu einer in die Konturwand (15) eingelassenen Zirkulationsöffnung (12) im Bereich der Laufschaufeln des Verdichterrades 1 erstreckt, wobei die Konturwand (15) mittels Streben (14) in der Zirkulationskammer (13) am Gehäuse (10) des Verdichters befestigt ist, **dadurch gekennzeichnet, dass** mindestens ein Paar von benachbart zueinander angeordneten Streben (14) in der Zirkulationskammer (13) einen anderen Abstand in Umfangsrichtung aufweisen als die anderen Paare von benachbart zueinander angeordneten Streben (14).

2. Verdichter nach Anspruch 1, wobei alle Paare von benachbart zueinander angeordneten Streben (14) einen anderen Abstand in Umfangsrichtung aufweisen als die anderen Paare von benachbart zueinander angeordneten Streben (14).

3. Verdichter nach einem der Ansprüche 1 oder 2, wobei in die Konturwand (15) zwei oder mehr, in Richtung der Strömung im Hauptströmungskanal voneinander beabstandete Zirkulationsöffnungen (12) eingelassen sind.

4. Verdichter nach einem der Ansprüche 1 bis 3, wobei die Streben (14) als Schaufelprofile bzw. Leitstege ausgebildet sind, um die Strömung in der Zirkulationskammer (13) mit einem Drall zu beaufschlagen.

5. Verdichter nach einem der Ansprüche 1 bis 4, wobei die Streben (14) alle rein radial oder alle gleich zur radialen Richtung geneigt ausgebildet sind.

6. Abgasturbolader, umfassen einen Verdichter nach einem der vorangehenden Ansprüche.
